# FASCICULE DE BREVET EUROPEEN

(11) **EP 2 156 732 B1**
(45) Date de publication et mention de la délivrance du brevet: **04.04.2012**
(21) Numéro de dépôt: 09358005.8
(22) Date de dépôt: 19.08.2009
(51) Int. Cl.: A01G 3/037, B26B 15/00

(54) **Outil électroportatif à commande par gâchette.**
Tragbares Elektrowerkzeug mit Auslöser
Portable electric tool with trigger control.

(30) Priorité: 22.08.2008 FR 0804679
(43) Date de publication de la demande: 24.02.2010
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- WO-A-2005/084416
- FR-A- 2 614 568
- FR-A- 2 770 372

## Description

La présente invention s'applique aux outils électroportatifs à commande par gâchette. Plus précisément, elle concerne le domaine des outils électroportatifs dont le fonctionnement est commandé, lors de leur utilisation, par une gâchette actionnée par au moins un doigt de la main tenant lesdits outils. En appuyant sur cette gâchette, on donne l'ordre à un actionneur (souvent constitué par un moteur électrique) de mettre en mouvement l'organe ou les organes actifs mobiles de l'outil dans un sens, en relâchant la dite gâchette, on donne l'ordre à l'actionneur soit de s'arrêter (pour les outils à un seul sens de fonctionnement) soit de mettre en mouvement l'organe ou les organes actifs mobiles de l'outil dans le sens inverse (pour les outils à deux sens de fonctionnement).

Un tel outil électroportatif à commande par gâchette est décrit dans le document FR-A-2 614 568.

Les sécateurs motorisés, notamment les sécateurs électriques et les sécateurs électroniques, sont des exemples d'outils courants comportant une gâchette de commande à deux sens de fonctionnement (ouverture et fermeture des organes de coupes).

L'invention est décrite ci-après dans ses applications particulièrement intéressantes aux sécateurs électroniques, mais il est précisé qu'elle peut également être appliquée à d'autres types de sécateurs motorisés et à d'autres types d'outils à commande par gâchette ; tels que cisailles, perceuses, meuleuses, raboteuses, etc.

De tels outils, dans leur version la plus évoluée, outre la réalisation de leur fonction principale de coupe, sont dotés d'au moins une fonction complémentaire, cette deuxième fonction étant par exemple constituée par la possibilité de maintien d'une vitesse ou position intermédiaire, ou de l'inversion de sens du moteur, ou de la mise en veille de l'outil.

Cette deuxième fonction est commandée par l'adjonction d'un dispositif de commande distinct et séparé de la gâchette, tel qu'un bouton-poussoir, un interrupteur, ... positionné sur le corps de l'outil, ce dispositif étant destiné à être actionné par un autre doigt que celui qui agit sur ladite gâchette.

Cette situation a toutefois pour inconvénient l'usage inconfortable de l'outil pour l'utilisateur qui est conduit à utiliser, soit deux doigts d'une main en même temps, soit, si la distance est trop importante entre ces deux organes de commande, à utiliser sa deuxième main, ce qui entraîne une perte de temps.

A titre d'exemple, de nombreux modèles de sécateurs sont dotés en plus de leur fonction d'ouverture et fermeture des organes de coupe commandée par une gâchette actionnée par le doigt de l'utilisateur, d'une deuxième fonction réalisée par un système électrique ou électronique permettant l'arrêt du pivotement de la lame mobile, dans une position intermédiaire prédéterminée, entre la position fermée et celle de pleine ouverture, donnant ainsi la possibilité de limiter l'ouverture des lames, ce qui est souhaitable dans certains cas, par exemple pour la coupe des petits bois, dans les travaux de taille, dans un souci de gain de temps et d'énergie. Cette deuxième fonction est commandée par un interrupteur indépendant de la gâchette de commande et doit être actionnée par un doigt différent de celui qui actionne ladite gâchette de commande et ceci chaque fois que l'on désire passer de la positon « pleine ouverture » à la position « ouverture intermédiaire » et vice versa.

Le passage d'une position à l'autre étant fréquent du fait de la diversité de grosseur des bois à couper sur une même plante, on imagine aisément la gêne et la perte de temps occasionnées par un tel dispositif.

L'invention a notamment pour but de remédier aux inconvénients et insuffisances susmentionnés des outils électroportatifs, en particulier des sécateurs électriques.

Selon l'invention, cet objectif est atteint grâce à un outil électroportatif conçu pour exercer une fonction principale et remarquable en ce qu'il comporte une gâchette double constituée, d'une part, d'une gâchette principale de commande de l'actionneur réalisant les mouvements d'au moins un organe actif mobile dudit outil, et, d'autre part, d'une gâchette auxiliaire ou gâchette secondaire reliée à ladite gâchette principale au moyen d'une articulation et disposée de façon à former un angle rentrant avec ladite gâchette principale, le pivotement de ladite gâchette auxiliaire permettant d'activer un moyen de commande d'un système organisé pour réaliser au moins une fonction supplémentaire dudit outil.

On comprend que ce dispositif de gâchette double permet de commander plusieurs fonctions de l'outil, avec un même doigt, ce qui procure confort et gain de temps.

Selon un mode d'exécution préféré applicable aux outils électroportatifs comprenant une tête de coupe comportant au moins une lame mobile dont les déplacements sont commandés par une carte électronique de contrôle, cette dernière est configurée pour commander l'ouverture complète des lames « pleine ouverture » ou le positionnement stable de la ou desdites lames mobiles en position d'ouverture partielle « ouverture intermédiaire « , et la gâchette auxiliaire permet d'agir sur un moyen de commande complémentaire dudit actionneur, via ladite carte électronique de contrôle.

Grâce à cet agencement, les lames des outils de coupe tels que les sécateurs électroniques peuvent être placées de façon stable dans une position d'ouverture partielle « ouverture intermédiaire », permettant une meilleure adaptation de l'ouverture des lames de coupe au diamètre des bois (branches, sarments, ...) à couper, ce qui procure d'appréciables économies d'énergie et gains de temps, outre un meilleur confort d'utilisation et une plus grande précision.

Il est possible de passer instantanément d'une position d'ouverture partielle « ouverture intermédiaire » prédéfinie à la position de « pleine ouverture », et vice versa. La grandeur de l'angle d'ouverture intermédiaire pouvant être réglable.

Selon un mode d'exécution très avantageux, un capteur, de préférence constitué par un capteur à effet Hall ou magnéto résistif, est disposé fixement sur le corps de l'outil, et la portion d'extrémité libre de la gâchette auxiliaire est munie d'un aimant permanent apte à être amené à proximité dudit capteur, ou éloigné de ce dernier.

Grâce à ce mode de réalisation du moyen de commande complémentaire de l'actionneur, la gâchette auxiliaire de la gâchette double ne se trouve en contact avec aucun organe mécanique ; il n'y a donc aucune usure mécanique de ce moyen de commande, ce qui procure une longue durée de fonctionnement de ce dernier dans le temps.

Les buts, caractéristiques et avantages ci-dessus, et, d'autres encore, ressortiront mieux de la description qui suit et des dessins annexés dans lesquels :
La figure 1 est une vue en élévation d'un outil électroportatif selon l'invention qui, selon l'exemple illustré, est constitué par un sécateur électronique représenté en position de repos selon laquelle la gâchette de commande et la gâchette auxiliaire ne sont pas actionnées.
La figure 2 est une vue de détail, à plus grande échelle du dispositif à double gâchette.
Les figures 3 et 4 sont des vues semblables aux figures 1 et 2, respectivement, la gâchette auxiliaire étant montrée en position d'actionnement.
Les figures 5 et 6 sont des vues semblables aux figures 1 et 2, respectivement et montrant les lames en position d'ouverture partielle « ouverture intermédiaire », la gâchette de commande et la gâchette auxiliaire se trouvant non actionnées.
Les figures 7 et 8 sont des vues semblables aux figures 5 et 6, respectivement, la gâchette de commande étant non actionnée alors que la gâchette auxiliaire est pivotée en position d'actionnement.
Les figures 9 et 10 sont des vues semblables aux figures 1 et 2, respectivement, la gâchette de commande étant actionnée pour provoquer la fermeture des lames de coupe, tandis que la gâchette auxiliaire n'est pas actionnée.
Les figures 11 et 12 sont des vues semblables aux figures 9 et 10, respectivement, la gâchette auxiliaire étant représentée en position d'actionnement.

On se réfère auxdits dessins pour décrire un exemple de réalisation intéressant, quoique nullement limitatif, d'un outil électroportatif selon l'invention qui, selon cet exemple très avantageux, est constitué par un sécateur électronique dont la tête de coupe comporte une lame mobile et une lame fixe.

Un outil de ce genre comprend, de manière connue en soi, un corps 1 conformé pour servir de poignée et sur l'une des extrémités duquel est fixée une contre-lame fixe 3 et une lame mobile 2 assemblée à cette contre-lame au moyen d'un axe 4 et dont les mouvements de pivotement sont réalisés par un actionneur (non représenté) comprenant généralement un moteur électrique. Une gâchette de commande accessible sur le corps de l'outil permet de commander le fonctionnement de l'outil, via une carte électronique de contrôle lorsqu'il s'agit de sécateurs électroniques.

Il est connu d'alimenter ces outils électroportatifs au moyen d'une batterie portée par l'utilisateur et installée dans un boîtier qui peut aussi loger la carte électronique de contrôle de l'actionneur de la lame mobile.

Selon l'invention, les outils électroportatifs conçus pour exercer une fonction principale, par exemple coupe de bois dont le diamètre peut varier entre 5 mm et 30 mm (taille de la vigne et des arbustes ou arbres fruitiers), comportent une gâchette double constituée, d'une part, d'une gâchette principale 5 de commande de l'actionneur réalisant les mouvements d'au moins un organe actif 2 mobile dudit outil, et, d'autre part, d'une gâchette auxiliaire ou gâchette secondaire 6 reliée à ladite gâchette principale 5 au moyen d'une articulation 7 et disposée de façon à former un angle rentrant α avec ladite gâchette principale, le pivotement de ladite gâchette auxiliaire 6 permettant d'activer un moyen de commande 8 d'un système organisé pour réaliser au moins une fonction supplémentaire dudit outil.

Cette fonction supplémentaire peut être, par exemple :
- le maintien d'une vitesse de rotation intermédiaire de l'outil de certains appareils électroportatifs munis d'un outil rotatif ;
- l'inversion du sens de rotation de cet outil rotatif ;
- la mise en veille de l'outil.

Selon une autre disposition caractéristique avantageuse applicable aux outils électroportatifs de coupe, par exemple aux sécateurs électroniques comprenant une tête de coupe comportant au moins une lame mobile dont les déplacements sont commandés par une carte électronique de contrôle, cette dernière est configurée pour commander, soit l'ouverture complète des lames « pleine ouverture », soit le positionnement stable de la ou desdites lames mobiles en position d'ouverture partielle « ouverture intermédiaire », et la gâchette auxiliaire 6 du dispositif de gâchette double 5-6 est disposée pour permettre d'agir sur un moyen de commande complémentaire 8 de l'actionneur de la ou desdites lames de coupe, via la carte électronique de contrôle.

Selon un mode d'exécution très intéressant, le moyen de commande de l'activation de la deuxième fonction de l'outil électroportatif est constitué par un capteur 8, de préférence par un capteur à effet Hall ou magnéto résistif, disposé fixement sur un élément 1a du corps 1 dudit outil, à proximité de la gâchette double 5-6. D'autre part, la gâchette auxiliaire 6 est munie, dans sa portion terminale libre, d'un aimant permanent 9 orienté en direction du capteur 8.

L'aimant 9 présente une forme allongée et une longueur telle qu'il peut être amené à proximité et face au capteur 8 par le pivotement de la gâchette auxiliaire 6, quelle que soit la position de la gâchette principale 5 (position de repos ou position de commande) laquelle intervient en effet sur le positionnement de ladite gâchette auxiliaire 6.

Bien entendu, la gâchette auxiliaire 6 pourrait être utilisée pour actionner d'autres moyens de commande de l'activation d'une deuxième fonction des outils électroportatifs, tels que, par exemple : bouton-poussoir, interrupteur ou autres, qui peuvent envoyer un signal à la carte électronique de contrôle.

De manière avantageuse, le moyen de commande (capteur 8, bouton poussoir, interrupteur ou autre) est monté fixement dans une pièce de liaison 1 a reliant rigidement le corps 1 et la garde de protection 1b de l'outil, ce qui a pour avantage de renforcer cette garde et de rendre l'utilisation de l'outil plus confortable, surtout lorsqu'on travaille en hauteur pour éviter que celui-ci ne recule dans la main.

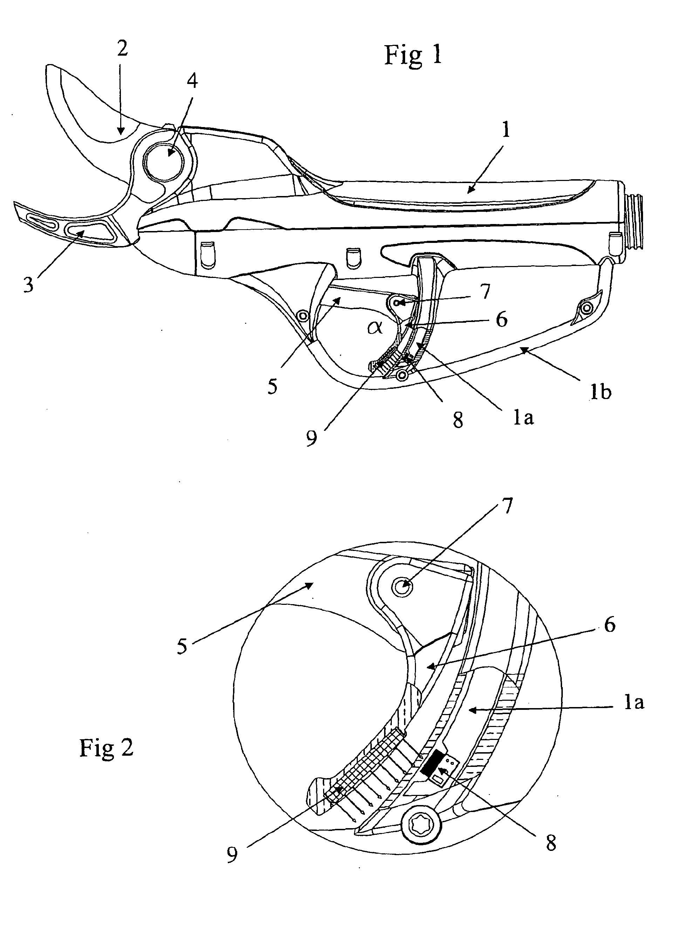

Lorsque la gâchette de commande principale 5 est relâchée, les lames de coupe 2, 3, se trouvent en position de complète ouverture, la portion d'extrémité de la gâchette auxiliaire se trouve éloignée du capteur 8, de sorte que l'aimant 9 n'est pas détecté par ce dernier (figures 1 et 2).

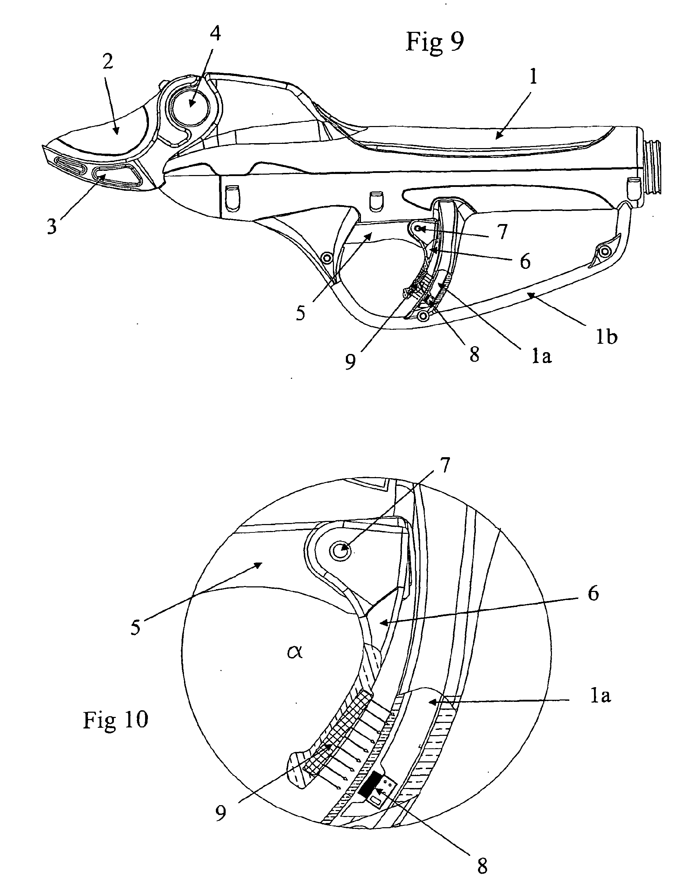

Il en est de même lorsqu'on appuie sur la gâchette principale 5 pour activer la fonction principale pour laquelle l'outil électroportatif a été conçu (figures 9 et 10).

Si l'on actionne la gâchette auxiliaire 6, le capteur à effet Hall ou magnéto résistif 8 détecte l'aimant 9 et envoie un signal à la carte électronique de contrôle pour lui commander de mettre en oeuvre au moins une deuxième fonction de l'outil.

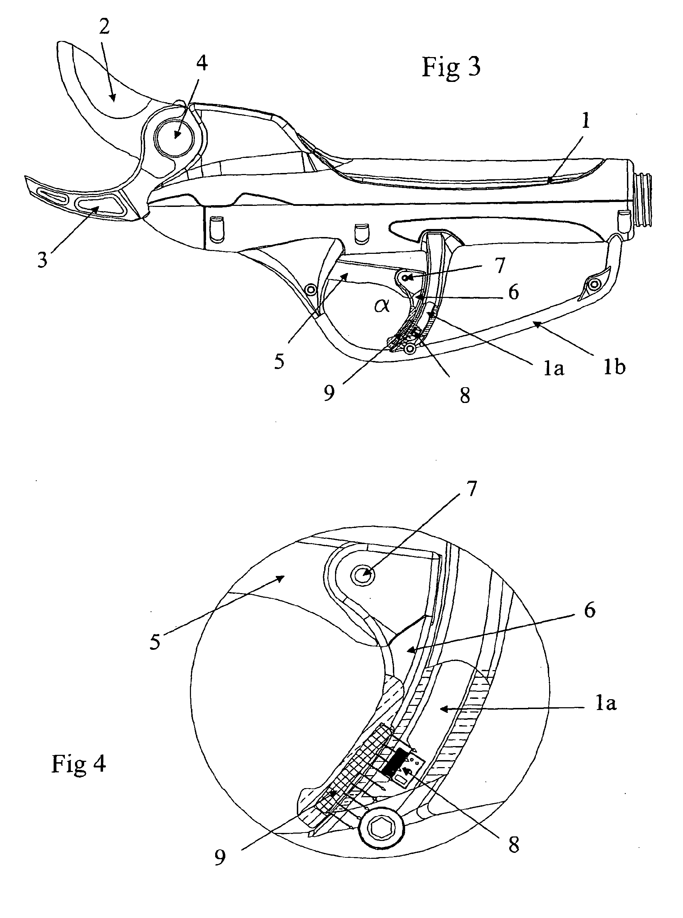

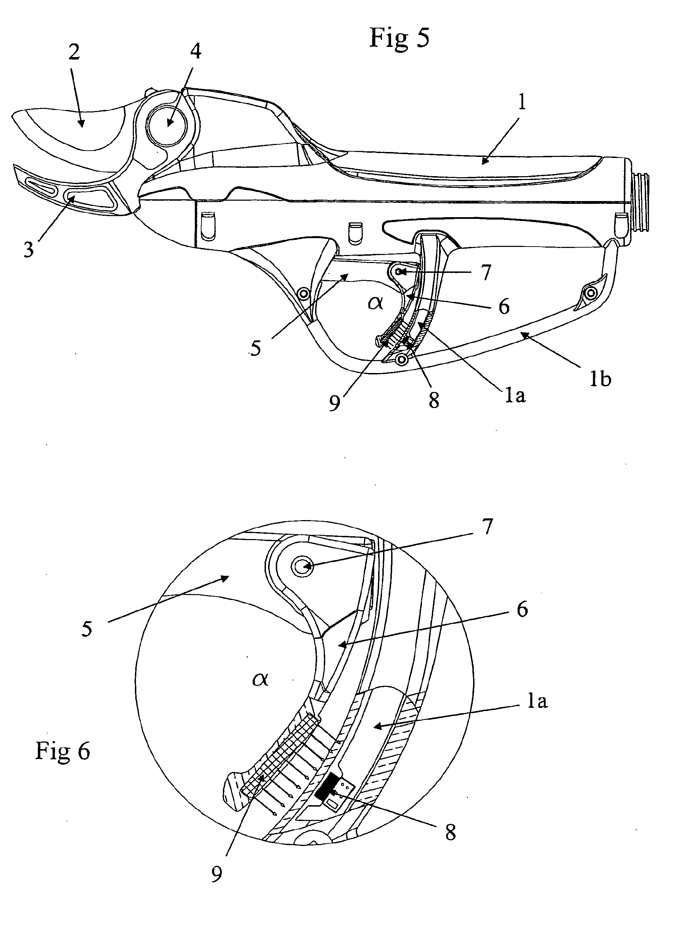

Par exemple, pour obtenir le placement de l'outil en position de veille, la gâchette principale 5 étant relâchée (figures 1 et 2) ou actionnée (figures 5 et 6) si l'on appui sur la gâchette auxiliaire 6 (figures 3 et 4) ; l'outil se trouve ainsi mis à l'arrêt jusqu'à un nouvel appui volontaire sur la gâchette de commande principale pour obtenir sa remise en marche.

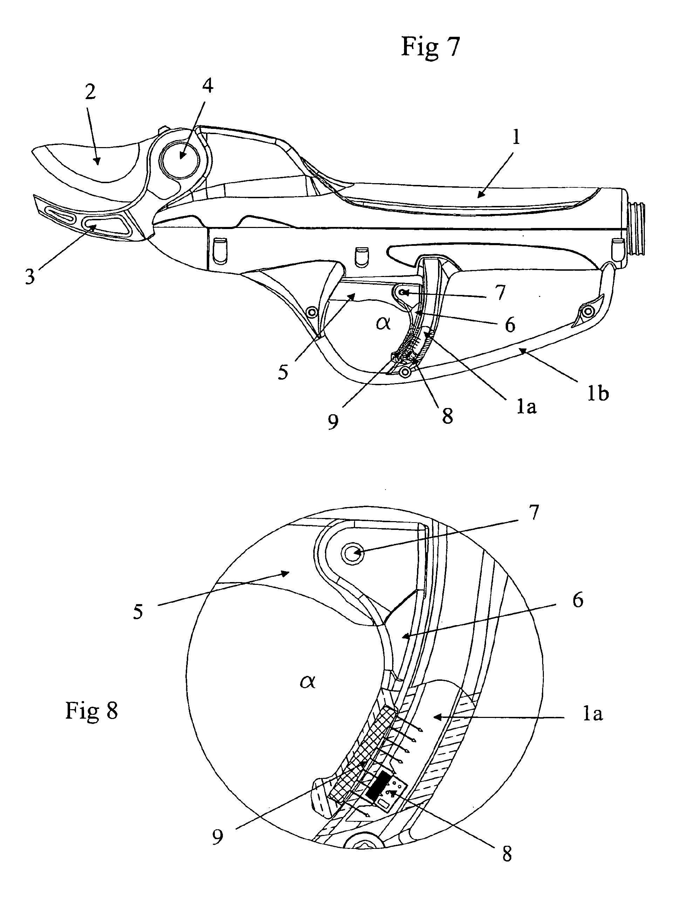

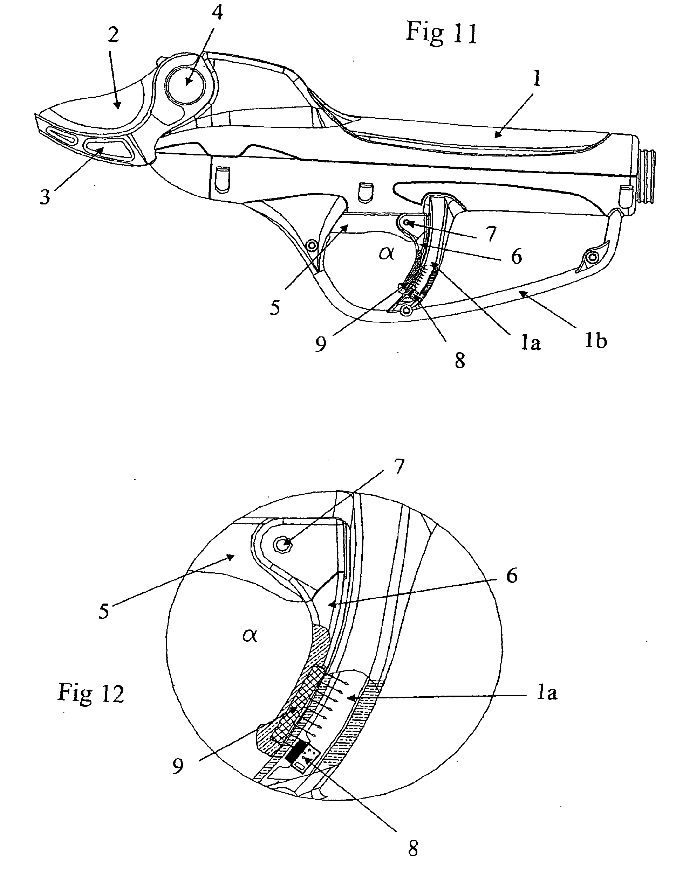

Comme indiqué précédemment, l'aimant 9 est suffisamment long pour être détecté par le capteur à effet Hall ou magnéto résistif 8, dans n'importe quelle position de la gâchette principale 5 : lames ouvertes (figures 3, 4), lame mobile arrêtée en position d'ouverture partielle (figures 7, 8), lames fermées (figures 11, 12).

L'exemple représenté sur le dessin illustre la possibilité de positionner stablement la lame mobile 2 dans une position d'ouverture partielle « ouverture intermédiaire ». Dans ce but, la carte électronique de contrôle est configurée et programmée pour commander l'actionneur de sorte à ne permettre qu'une ouverture partielle de ladite lame mobile 3 lorsque l'appui sur la gâchette principale 5 est relâché afin de gagner du temps lors de l'exécution des travaux de coupe de petits bois, compte tenu de la course plus réduite de la lame mobile.

La carte électronique de contrôle peut être configurée de manière que, dans cette situation de fonctionnement à « ouverture intermédiaire » de la tête de coupe des outils :
■ si l'on appuie sur la gâchette auxiliaire 6, la carte électronique de commande assure le replacement de l'outil en fonctionnement normal de « pleine ouverture » des lames de coupe ;
■ si l'on maintient l'appui sur la gâchette auxiliaire 6, tout en actionnant la gâchette de commande principale 5, la lame mobile 2 s'ouvre complètement;
■ si l'on relâche la gâchette auxiliaire 6, la carte électronique de contrôle donne l'ordre de revenir en mode de fonctionnement « ouverture intermédiaire ».

## Revendications

1. Outil électroportatif à commande par gâchette, conçu pour exercer une fonction principale, **caractérisé en ce qu'**il comporte une gâchette double (5-6) constituée, d'une part, d'une gâchette principale de commande (5) de l'actionneur réalisant les mouvements d'au moins un organe actif mobile (3) dudit outil, et, d'autre part, d'une gâchette auxiliaire ou gâchette secondaire (6) reliée à ladite gâchette principale (5) au moyen d'une articulation (7) et disposée de façon à former un angle (α) avec ladite gâchette principale (5), le pivotement de ladite gâchette auxiliaire (6) autour de l'articulation (7) permettant d'activer un moyen de commande (8) d'un système organisé pour réaliser au moins une fonction supplémentaire dudit outil.

2. Outil électroportatif, selon la revendication 1, du genre comprenant une tête de coupe comportant au moins une lame mobile (3) dont les déplacements sont commandés par une carte électronique de contrôle, **caractérisé en ce que** ladite carte électronique de contrôle est configurée pour commander l'ouverture complète des lames (2, 3) ou le positionnement stable de la ou desdites lames mobiles en position d'ouverture partielle, et la gâchette auxiliaire (6) permet d'agir sur un moyen (8) de commande complémentaire dudit actionneur, via la carte électronique de contrôle.

3. Outil électroportatif, selon l'une des revendications 1 ou 2, **caractérisé en ce que** le moyen de commande du système organisé pour réaliser une fonction supplémentaire de l'outil est constitué par un capteur (8) à effet Hall ou magnéto résistif, disposé fixement sur le corps (1) de l'outil, et la portion d'extrémité libre de la gâchette auxiliaire (6) est munie d'un aimant permanent (9) apte à être amené à proximité dudit capteur ou éloigné de ce dernier.

4. Outil électroportatif, selon la revendication 3, **caractérisé en ce que** l'aimant (9) présente une forme allongée et une longueur telle qu'il peut être amené à proximité et face au capteur (8) par le pivotement de la gâchette auxiliaire (6), quelle que soit la position de la gâchette principale (5).

5. Outil électroportatif, selon l'une des revendications 1 ou 2, **caractérisé en ce que** le moyen de commande du système organisé pour réaliser une fonction supplémentaire de l'outil est constitué par un interrupteur actionné par la gâchette auxiliaire.

6. Outil électroportatif, selon l'une des revendications 1 ou 2, **caractérisé en ce que** le moyen de commande du système organisé pour réaliser une fonction supplémentaire de l'outil est constitué par un bouton-poussoir actionné par la gâchette auxiliaire.

7. Outil électroportatif, selon l'une quelconque des revendications 1 à 6, **caractérisé en ce que** le moyen de commande (8) du système organisé pour réaliser une fonction supplémentaire de l'outil est monté fixement dans une pièce de liaison (1a) reliant rigidement le corps (1) et la garde de protection (1b) dudit outil.

## Claims

1. Portable electrical tool controlled by a trigger, designed to exercise a main function, **characterised in that** it includes a double trigger (5-6) constituted, on the one hand, of a main control trigger (5) of the actuator producing the movements of at least one mobile active member (3) of said tool and, on the other hand, of an auxiliary trigger or secondary trigger (6) connected to said main trigger (5) by means of an articulation (7) and disposed to form an angle (α) with said main trigger (5), pivoting of said auxiliary trigger (6) about the articulation (7) enabling activation of control means (8) of a system organised to perform at least one supplementary function of said tool.

2. Portable electrical tool according to claim 1, of the kind comprising a cutting head including at least one mobile blade (3), the movements of which are controlled by an electronic control card, **characterised in that** said electronic control card is configured to command the complete opening of the blades (2, 3) or the stable positioning of said mobile blade(s) in a partially-open position and the auxiliary trigger (6) enables action on complementary control means (8) of said actuator via the electronic control card.

3. Portable electrical tool according to either of claims 1 or 2, **characterised in that** the control means of the system organised to perform a supplementary function of the tool is constituted by a Hall effect or magnetoresistive sensor (8) fixedly disposed on the body (1) of the tool and the free end portion of the auxiliary trigger (6) is provided with a permanent magnet (9) adapted to be moved close to or far away from said sensor.

4. Portable electrical tool according to claim 3, **characterised in that** the magnet (9) has an elongate shape and a length such that it may be moved close to and face the sensor (8) by pivoting of the auxiliary trigger (6) regardless of the position of the main trigger (5).

5. Portable electrical tool according to either of claims 1 or 2, **characterised in that** the control means of the system organised to perform a supplementary function of the tool is constituted by a switch actuated by the auxiliary trigger.

6. Portable electrical tool according to either of claims 1 or 2, **characterised in that** the control means of the system organised to perform a supplementary function of the tool is constituted by a pushbutton actuated by the auxiliary trigger.

7. Portable electrical tool according to any one of claims 1 to 5, **characterised in that** the control means (8) of the system organised to perform a supplementary function of the tool is fixedly mounted in a connecting part (1a) rigidly connecting the body (1) and the protective guard (1b) of said tool.

## Patentansprüche

1. Tragbares Elektrowerkzeug mit Betätigung per Druckschalter, der für die Ausführung einer Hauptfunktion ausgelegt ist, **dadurch gekennzeichnet, dass** es einen doppelten Druckschalter (5 - 6) enthält, der einerseits aus einem Hauptdruckschalter (5) der Betätigungseinrichtung, der die Bewegungen mindestens eines aktiven beweglichen Organs (3) des Werkzeugs verwirklicht, und andererseits aus einem Hilfsdruckschalter oder Sekundärdruckschalter (6) gebildet wird, der mit dem Hauptdruckschalter (5) mittels einer Gelenkverbindung (7) verbunden ist und so angeordnet ist, dass er mit dem Hauptdruckschalter (5) einen Winkel (α) bildet, wobei die Schwenkung des Hilfsdruckschalters (6) um die Gelenkverbindung (7) die Aktivierung eines Steuermittels (8) eines Systems gestattet, das so eingerichtet ist, dass es mindestens eine zusätzliche Funktion des Werkzeugs verwirklicht.

2. Tragbares Elektrowerkzeug nach Anspruch 1, der Art, die einen Schneidkopf aufweist, der mindestens eine bewegliche Klinge (3) aufweist, deren Bewegungen über eine elektronische Steuerplatine gesteuert werden, **dadurch gekennzeichnet, dass** diese elektronische Steuerplatine dafür konfiguriert ist, die vollständige Öffnung der Klingen (2, 3) oder die stabile Positionierung der beweglichen Klinge oder Klingen in teilweise geöffneter Position zu steuern, und der Hilfsdruckschalter (6) es gestattet, über die elektronische Steuerplatine auf ein ergänzendes Steuermittel (8) der Betätigungseinrichtung einzuwirken.

3. Tragbares Elektrowerkzeug nach einem der Ansprüche 1 oder 2, **dadurch gekennzeichnet, dass** das Steuermittel des Systems, das zum Verwirklichen einer zusätzlichen Funktion des Werkzeugs eingerichtet ist, aus einem Halleffekt- oder magnetoresistivem Sensor (8) gebildet ist, der fest am Körper (1) des Werkzeugs angeordnet ist, und der freie Endabschnitt des Hilfsdruckschalters (6) mit einem Permanentmagneten (9) ausgestattet ist, der in die Nähe des Sensors geführt oder von diesem weg bewegt werden kann.

4. Tragbares Elektrowerkzeug nach Anspruch 3, **dadurch gekennzeichnet, dass** der Magnet (9) eine längliche Form und eine solche Länge aufweist, dass er ungeachtet der Position des Hauptdruckschalters (5) durch die Schwenkung des Hilfsdruckschalters (6) in die Nähe des Sensors (8) und diesem gegenüberliegend bewegt werden kann.

5. Tragbares Elektrowerkzeug nach einem der Ansprüche 1 oder 2, **dadurch gekennzeichnet, dass** das Steuermittel des Systems, das zum Verwirklichen einer zusätzlichen Funktion des Werkzeugs eingerichtet ist, aus einem Schalter gebildet ist, der durch den Hilfsdruckschalter betätigt wird.

6. Tragbares Elektrowerkzeug nach einem der Ansprüche 1 oder 2, **dadurch gekennzeichnet, dass** das Steuermittel des Systems, das zum Verwirklichen einer zusätzlichen Funktion des Werkzeugs eingerichtet ist, aus einem Drucktaster gebildet wird, der durch den Hilfsdruckschalter betätigt wird.

7. Tragbares Elektrowerkzeug nach einem der Ansprüche 1 bis 6, **dadurch gekennzeichnet, dass** das Steuermittel (8) des Systems, das zum Verwirklichen einer zusätzlichen Funktion des Werkzeugs eingerichtet ist, fest in einem Verbindungsstück (1 a) montiert ist, das den Körper (1) und die Schutzabdeckung (1 b) des Werkzeugs starr miteinander verbindet.
